# EUROPÄISCHE PATENTANMELDUNG

(11) **EP 3 800 369 A1**
(43) Veröffentlichungstag der Anmeldung: **07.04.2021**
(21) Anmeldenummer: 20193947.7
(22) Anmeldetag: 01.09.2020
(51) Int. Cl.: F16F 13/26

(54) **HYDROLAGER**

(30) Priorität: 01.10.2019 DE 102019215092
(71) Anmelder: ContiTech Vibration Control GmbH, 30165 Hannover (DE)
(72) Erfinder: Schneider, Diethard, 30419 Hannover (DE); Marienfeld, Peter, 30419 Hannover (DE)
(74) Vertreter: Continental Corporation

(57) **Zusammenfassung**

Dargestellt und beschrieben ist ein Hydrolager (1) mit einer Tragfeder (3), einer von der Tragfeder (3) zumindest teilweise umfassten Arbeitskammer (5), die mit einer Hydraulikflüssigkeit gefüllt ist, einer Ausgleichskammer (7), einem zwischen der Arbeitskammer (5) und der Ausgleichskammer (7) ausgebildeten Drosselkanal (9) zum Austausch von Hydraulikflüssigkeit, einem Steuerkolben (11), der eingerichtet ist, um durch eine Bewegung entlang einer Kolbenachse (31) das Volumen der Arbeitskammer (5) zu steuern, und einem Aktor (13) zum gesteuerten Auslenken des Steuerkolbens (11) entlang der Kolbenachse (31). Die Aufgabe, ein Hydrolager bereitzustellen, das eine besonders platzsparende Anordnung und hohe Lebensdauer aufweist, insbesondere im Falle eines invertierten Einbaus, wird dadurch gelöst, dass der Aktor (13) auf der von der Ausgleichskammer (7) abgewandten Seite der Tragfeder (3) angeordnet ist.

## Beschreibung

Die vorliegende Erfindung betrifft ein Hydrolager, insbesondere ein aktives Hydrolager für Kraftfahrzeuge. Ein weiterer Aspekt der Erfindung betrifft ein Kraftfahrzeug mit einem solchen Hydrolager.

Das Hydrolager umfasst eine Tragfeder, eine Arbeitskammer, eine Ausgleichskammer, einen Drosselkanal, einen Steuerkolben und einen Aktor.

Die Tragfeder umfasst einen Innenbereich zumindest teilweise und ist vorzugsweise aus Elastomermaterial gebildet. Sie dient zur gefederten Übertragung von Kräften in Richtung einer Lagermittelachse.

Die Arbeitskammer ist zumindest teilweise in dem Innenbereich angeordneten und dabei zumindest teilweise von der Tragfeder umfasst oder umschlossen sowie mit einer Hydraulikflüssigkeit gefüllt, so dass bei einer Lasteinleitung und der daraus resultierenden elastischen Verformung der Tragfeder das Volumen der Arbeitskammer verändert wird. Insbesondere wird das Volumen der Arbeitskammer bei Drucklasten, d.h. bei Kompression der Tragfeder reduziert, so dass Hydraulikflüssigkeit durch den Drosselkanal in die Ausgleichskammer ausweicht. Bei einer entsprechenden Entlastung der Tragfeder strömt die Hydraulikflüssigkeit aus der Ausgleichskammer über der Drosselkanal wieder in die Arbeitskammer zurück.

Die Ausgleichskammer ist dabei zumindest einseitig von einer elastischen bzw. verformbaren Haut mit geringer Steifigkeit begrenzt, so dass das Volumen der Ausgleichskammer ohne nennenswerte Krafteinwirkung durch Ausdehnen der Haut erweitert werden kann.

Der Drosselkanal ist zwischen der Arbeitskammer und der Ausgleichskammer ausgebildet, vorzugsweise als Ringkanal, der sich konzentrisch um die Lagermittelachse erstreckt, und dient zum Austausch von Hydraulikflüssigkeit zwischen der Arbeitskammer und der Ausgleichskammer. Vorzugsweise hat der Drosselkanal dabei einen verringerten Querschnitt im Vergleich zu der Arbeits- und Ausgleichskammer.

Der Steuerkolben ist vorzugsweise linear beweglich entlang einer Kolbenachse gelagert ist und eingerichtet ist, um durch eine Bewegung entlang einer der Kolbenachse das Volumen der Arbeitskammer zu steuern, insbesondere gesteuert anzupassen. Dazu kann der Steuerkolben beispielsweise einen Kolbenkopf mit erweitertem Querschnitt aufweisen oder mit einer elastischen Steuermembran verbunden sein, die durch eine Bewegung des Steuerkolbens verformt, insbesondere gewölbt wird.

Der Aktor dient zum gesteuerten Auslenken des Steuerkolbens entlang der Kolbenachse und ist vorzugsweise ein elektromagnetischer oder elektrodynamischer Linearmotor, kann aber auch ein Hydraulikzylinder, ein Pneumatikzylinder, oder ein Piezoaktor sein.

Hydrolager, die auch als Hydrauliklager bezeichnet werden, sind aus dem Stand der Technik bekannt. Sie dienen unter Anderem zur elastischen Abstützung von Aggregaten, insbesondere von Kraftfahrzeugmotoren. Mit Hilfe derartiger, sich z. B. zwischen einem Motor und einem Fahrzeugrahmen des Kraftfahrzeugs befindenden Hydrolagern soll verhindert werden, dass Vibrationen des Motors auf den Fahrzeugrahmen übertragen werden, da die Vibrationen von einem Fahrgast des Kraftfahrzeugs oftmals als unangenehme Geräusche wahrgenommen werden.

Dabei ist der bekannte Konflikt in der Schwingungsisolation zu beachten, der darin besteht, dass das Hydrolager einerseits möglichst steif sein soll, um hohe Lasten bzw. Lagerkräfte aufnehmen zu können, und andererseits eine weiche Charakteristik aufweisen muss, um entstehende Schwingungen über einen möglichst breiten Frequenzbereich zu isolieren.

In ihrer Grundversion weisen derartige Hydrauliklager üblicherweise ein Gummielement als Tragfeder, die auch als Tragkörper bezeichnet wird, in Verbindung mit einem hydraulischen Dämpfer auf. Das Gummielement ist oft als Hohlkonus ausgebildet. Die Tragfeder kann somit eine Mantelwandung der Arbeitskammer bilden. An der oberen, spitzen Stirnseite im Zentrum des Hohlkonuses ist zumeist eine obere Abdeckung vorgesehen, an der ein Anschlusselement, auch inneres Lasteinleitungselement genannt, zur Befestigung des Motors angebracht ist. Das Anschlusselement ist für gewöhnlich ein Gewindebolzen, der mit dem Motor verschraubt werden kann. Ein weiteres Anschlusselement, auch äußeres Lasteinleitungselement genannt, ist an dem äußeren bzw. unteren Rand der Tragfeder angebracht und dient zur Abstützung an dem Fahrzeugrahmen. Es kann beispielsweise als Lagergehäuse ausgebildet sein. Dabei umfasst der hydraulische Dämpfer zumeist mindestens zwei Kammern, nämlich die genannte Arbeitskammer und eine Ausgleichskammer. In Längsrichtung des Hydrolagers ist die Ausgleichskammer für gewöhnlich unterhalb der Arbeitskammer angeordnet. Um die Arbeitskammer und die Ausgleichskammer voneinander zu trennen, kann zwischen der Ausgleichskammer und der Arbeitskammer eine Trennwand angeordnet sein. Außerdem ist ein zwischen der Arbeitskammer und der Ausgleichkammer erstreckender Drosselkanal zum Austausch von Hydraulikflüssigkeit vorgesehen. Mittels des Drosselkanals entsteht deshalb eine hydraulische Kopplung zwischen der Arbeitskammer und der Ausgleichskammer. Vorzugsweise ist der Drosselkanal zumindest abschnittsweise von der Trennwand ausgebildet. Alternativ kann der Drosselkanal auch von der Trennwand getrennt ausgebildet sein. Vorzugsweise sind auch die Ausgleichskammer zumindest teilweise und der Drosselkanal mit Hydraulikflüssigkeit gefüllt. Als Hydraulikflüssigkeit wird vorzugsweise ein Gemisch aus Öl und Wasser oder ein Fluid mit Glykol eingesetzt.

Bei einer Belastung des Hydrolagers wirkt eine Kraft in Längsrichtung des Hydrolagers, d.h. in Richtung der Lagermittelachse auf die Tragfeder, so dass sich diese elastisch verformt. Diese Verformung wird auch als Einfedern der Tragfeder bezeichnet. Die Arbeitskammer ist von der Tragfeder zumindest teilweise umfasst, so dass die Arbeitskammer durch das Einfedern der Tragfeder verkleinert wird. Damit steigt der Druck in der Arbeitskammer an, woraufhin ein Teil der Hydraulikflüssigkeit aus der Arbeitskammer durch den Drosselkanal in die Ausgleichskammer strömt. Für die strömende Hydraulikflüssigkeit stellt der Drosselkanal einen Strömungswiderstand dar. Das Durchströmen des entsprechend ausgebildeten Drosselkanals erzeugt deshalb Dissipation und somit Dämpfungsarbeit.

Die Ausgleichskammer ist bevorzugt mit mindestens einem membranartig verformbaren Wandungsteil, insbesondere einer Rollmembran, versehen, so dass der in die Ausgleichskammer einströmende Teil der Hydraulikflüssigkeit aufgenommen werden kann.

Ein derartiges Hydrolager ist beispielsweise aus dem Dokument DE 693 00 371 T2 bekannt.

Die Dämpfungseigenschaften solcher Hydrolager sind aufgrund ihrer Bauweise frequenzabhängig. Statische oder quasistatische Belastungen unterhalb einer Frequenz von 5 Hz werden üblicherweise von der Tragfeder aufgenommen, die eine relativ große Steifheit aufweist.

Niederfrequente Schwingungen, d.h. Schwingungen mit Frequenzen von ca. 5 bis 20 Hz, die im Allgemeinen mit großen Amplituden auftreten, werden durch das Zusammenwirken der Arbeitskammer und der Ausgleichskammer über den Drosselkanal gedämpft. Die Dämpfung entsteht dabei mit dem Strömen von zumindest einem Teil der Hydraulikflüssigkeit aus der Arbeitskammer durch den Drosselkanal in die Ausgleichskammer, und umgekehrt, wobei eine entsprechende Dämpfungsarbeit geleistet wird.

Hochfrequente Schwingungen, also Schwingungen im Frequenzbereich von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Zur besseren Isolation solcher hochfrequenten Schwingungen werden daher häufig aktiv gesteuerte Hydrolager eingesetzt, die einen Aktor aufweisen, der auch als Aktuator bezeichnet wird. Bezüglich der grundlegenden Wirkungsweise eines solchen Aktors wird auf die Druckschrift DE 198 39 464 C2 verwiesen.

Für ein aus dem Stand der Technik bekanntes Hydrolager ist ein Steuerkolben oder Anker des Aktors mechanisch mit einer Steuermembran verbunden, die vorzugsweise der Trennwand zugeordnet ist. Somit ist die Steuermembran zur Veränderung des Arbeitskammervolumens ausgebildet. Die Steuermembran kann dabei durch einen flexiblen Teil der Trennwand gebildet sein. Es ist aber auch möglich, dass die Steuermembran in einer Öffnung der Trennwand stoffschlüssig befestigt ist, wobei der Randbereich der Trennwand elastisch ausgebildet ist, um mit der restlichen Steuermembran eine Hubbewegung ausführen zu können. Die Steuermembran kann also in ihrer Normalenrichtung elastisch verformt werden, insbesondere gewölbt werden. Indem der Steuerkolben mechanisch an die Steuermembran gekoppelt ist, kann die Steuermembran mit dem Steuerkolben in ihrer Normalenrichtung gesteuert verformt werden.

Mit dem elastischen Verformen der Steuermembran in ihrer Normalenrichtung verändern sich das Hydraulikvolumen der Arbeitskammer und/oder der Druck in der Arbeitskammer. Dies gilt insbesondere dann, wenn die Steuermembran einen Teil der Trennwand zu der Arbeitskammer bildet. Deshalb dient der Aktor auch zur Steuerung des Hydraulikvolumens der Arbeitskammer und/oder des Drucks der Arbeitskammer.

Wird das Hydrolager zur Lagerung eines Motors eines Kraftfahrzeuges eingesetzt, so können Sensoren des Kraftfahrzeugs eingesetzt werden, um die vom Motor ausgehenden Schwingungen in einem möglichst nur sehr gedämpften Maß an einen Innenraum zu übertragen oder die Schwingungen des Motors sogar vollständig zu entkoppeln. Hierzu kann beispielsweise ein Sensor vorgesehen sein, der Schwingungen des Motors oder des Fahrzeugrahmens messen kann. Alternativ können auch mehrere Sensoren an unterschiedlichen Orten des Motors und/oder des Fahrzeugrahmens vorgesehen sein.

Werden von dem Sensor zur Messung der Schwingungen des Fahrzeugrahmens hochfrequente Schwingungen erfasst, kann die Steuermembran von dem Aktor synchron ausgelenkt werden. Die Richtung der Auslenkung kann dabei durch die Bauart des Hydrolagers bestimmt sein. Die Schwingungen des Motors verursachen entsprechende hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Geräuschemissionen.

Alternativ zum Einsatz einer Steuermembran kann der Steuerkolben auch gleitend beweglich in einem mit der Arbeitskammer verbundenen Zylinderkanal der Trennwand angeordnet sein und auf diese Weise direkt das Hydraulikvolumen der Arbeitskammer steuern. Eine solche Anordnung ist beispielsweise aus der DE 10 2014 223 406 A1 bekannt. Es ist bekannt, dass solche Lageranordnungen relativ platzintensiv sind.

Bei dieser aus der DE 10 2014 223 406 A1 bekannten sowie bei anderen zuvor beschriebenen Anordnungen wird das Hydrolager in einer sogenannten Normalstellung verwendet, wobei der Motor am inneren Lasteinleitungselement aufliegt und das Lager wiederum über das äußere Lasteinleitungselement an dem Fahrzeugrahmen aufliegt.

Es ist jedoch ebenfalls bekannt, derartige Hydrolager in invertierter Stellung einzusetzen, so dass der Motor an dem äußeren Lasteinleitungselement abgestützt wird und das Lager über das innere Lasteinleitungselement an dem Fahrzeugrahmen aufliegt. Bei solch einer Anordnung ist dann jedoch der Aktor auf der hohen Schwingungen ausgesetzten Motorseite des Lagers angeordnet, was negative Auswirkungen auf die Lebensdauer des Aktors hat.

Die Aufgabe der vorliegenden Erfindung ist es, die zuvor genannten Nachteile zu beseitigen, insbesondere ein Hydrolager bereitzustellen, das eine besonders platzsparende Anordnung und hohe Lebensdauer aufweist, insbesondere im Falle eines invertierten Einbaus.

Diese Aufgabe wird durch die Merkmale der unabhängigen Ansprüche gelöst. Insbesondere wird die Aufgabe dadurch gelöst, dass der Aktor und vorzugsweise auch der Steuerkolben zumindest teilweise auf der von dem Innenbereich abgewandten Seite der Tragfeder angeordnet ist, vorzugsweise zentral angeordnet ist, so dass die Kolbenachse koaxial zu der Lagermittelachse verläuft. Die von dem Innenbereich abgewandten Seite der Tragfeder ist vorzugsweise auch die von der Ausgleichskammer und/oder dem Drosselkanal und/oder der Arbeitskammer abgewandte Seite der Tragfeder.

Auf diese Weise wird eine besonders kompakte Bauweise des Hydrolagers erreicht. Dies gilt besonders für invers eingebaute Hydrolager, da der relativ schmale Aktor leicht in dem Fahrzeugrahmen versenkt eingebaut werden kann. Außerdem ist es möglich, das Hydrolager invers einzubauen, ohne dass der Aktor auf der Motorseite des Hydrolagers angeordnet ist. Auf diese Weise kann die Lebensdauer des Aktors erhöht werden.

In einer bevorzugten Ausführungsform hat die Tragfeder eine konische oder pyramidenartige Form, insbesondere die Form eines Hohlkonus bzw. einer Hohlpyramide, mit einer vorzugsweise konkaven Innenseite, die zu dem Innenbereich gerichtet ist, einer gegenüberliegenden vorzugsweise konvexen Außenseite, die von dem Innenbereich abgewandt ist und auf deren Seite der Aktor angeordnet ist, einem vorzugsweise umlaufenden äußeren Rand und einem Zentrum am Scheitelpunkt der Tragfeder im Bereich der Lagermittelachse. Dies stellt eine übliche Form der Tragfeder dar, die eine besonders vorteilhafte Einfederung erlaubt.

Dabei ist es besonders bevorzugt, wenn die Tragfeder Lasten überträgt zwischen einem äußeren Lasteinleitungselement, vorzugsweise aus Metall, das entlang des äußeren Rands befestigt ist, und einem inneren Lasteinleitungselement, vorzugsweise aus Metall, auch als Lagerkern oder inneres Metallteil bezeichnet, das im Zentrum befestigt ist. Auch dies stellt einen üblichen Aufbau der Tragfeder dar, der eine sichere Lasteinleitung erlaubt. Vorzugsweise ist der Aktor, insbesondere ein Aktorgehäuse, an dem inneren Lasteinleitungselement abgestützt. Die Abstützung kann dabei direkt oder indirekt, beispielsweise über ein Zwischengehäuse erfolgen. Auf diese Weise können Lagerkräfte über den Aktor bzw. das Aktorgehäuse auf den Fahrzeugrahmen übertragen werden.

In einer bevorzugten Ausführungsform ist der Steuerkolben im Zentrum mit der Tragfeder fest verbunden, vorzugsweise an diese anvulkanisiert, so dass durch eine Bewegung des Steuerkolbens entlang der Kolbenachse die Tragfeder im Bereich des Steuerkolbens verformt und dadurch das Volumen der Arbeitskammer verändert, insbesondere gesteuert werden kann. Auf diese Weise wird eine relativ einfache Bauweise mit wenigen Bauteilen erreicht, bei welcher der Steuerkolben die Tragfeder nicht durchdringen muss und insofern keine Abdichtung erforderlich ist.

In einer alternativen Ausführungsform weist das innere Lasteinleitungselement einen Durchgangskanal auf, der die Innenseite der Tragfeder mit der Außenseite verbindet und ein Durchströmen von Hydraulikflüssigkeit aus der Arbeitskammer zulässt, d.h. in Fluidverbindung mit der Arbeitskammer ist. Auf diese Weise kann das innere Lasteinleitungselement genutzt werden, um eine Fluidverbindung zu der Arbeitskammer zu bilden und damit Einfluss auf das Volumen der Arbeitskammer nehmen zu können.

Dabei ist es besonders bevorzugt, wenn der Durchgangskanal sich entlang der Kolbenachse und vorzugsweise entlang der Lagermittelachse erstreckt und der Steuerkolben gleitend verschiebbar in dem Durchgangskanal gelagert ist und diesen abdichtet. Dadurch ist das Volumen der Arbeitskammer um den zu der Arbeitskammer offenen Teil, d.h. den mit der Arbeitskammer fluidverbundenen Teil des Durchgangskanals erweitert, so dass die Größe dieses zur Arbeitskammer offenen Teils des Durchgangskanals und somit das Volumen der Arbeitskammer durch eine Bewegung des Steuerkolbens verändert werden kann, insbesondere gesteuert werden kann. Auf diese Weise kann das Volumen der Arbeitskammer besonders einfach und unter Verwendung weniger Bauteile gesteuert werden.

Alternativ ist es bevorzugt, wenn der Durchgangskanal eine Trichterform hat, so dass der Durchmesser des Durchgangskanals an der Außenseite der Tragfeder größer ist als der Durchmesser des Durchgangskanals an der Innenseite der Tragfeder, vorzugsweise zwischen 1% und 1000% größer, weiter bevorzugt zwischen 50% und 150% größer, meist bevorzugt etwa 100% größer. Auf diese Weise kann ein besonders großer Durchmesser des Durchgangskanals an der Außenseite der Tragfeder vorgesehen sein, so dass das Volumen der Arbeitskammer über eine besonders große Fläche beeinflusst werden kann, beispielsweise durch eine Steuermembran, die mit besonders großem Durchmesser versehen sein kann.

Dabei ist es besonders bevorzugt, wenn an dem Steuerkolben senkrecht zur Kolbenachse eine elastische Steuermembran befestigt ist, die den Durchgangskanal vorzugsweise abdichtet und die durch eine Bewegung des Steuerkolbens entlang der Kolbenachse elastisch verformt, insbesondere gewölbt und vorzugsweise in Schwingung versetzt werden kann. Durch eine solche Steuermembran kann das Volumen der Arbeitskammer besonders gut und auf einfache Weise gesteuert werden, ohne dass die Abdichtung eines gleitenden Steuerkolbens erforderlich ist und ohne dass der Durchgangskanal einen konstanten Durchmesser haben muss.

Dabei ist es besonders bevorzugt, wenn die Steuermembran auf der Außenseite der Tragfeder an dem inneren Lasteinleitungselement derart befestigt ist, dass die Steuermembran den Durchgangskanal abdichtet. Dadurch ist das Volumen der Arbeitskammer um den zu der Arbeitskammer offenen, d.h. mit der Arbeitskammer fluidverbundenen Durchgangskanal erweitert, so dass die Größe des Durchgangskanals und somit das Volumen der Arbeitskammer durch eine Wölbung der Steuermembran durch Bewegung des Steuerkolbens verändert werden kann, insbesondere gesteuert werden kann. Auf diese Weise kann das Volumen der Arbeitskammer besonders einfach und unter Verwendung weniger Bauteile gesteuert werden.

Alternativ ist es besonders bevorzugt, wenn zwischen der Außenseite der Tragfeder und dem Aktor, insbesondere dem Aktorgehäuse, ein Zwischengehäuse vorgesehen ist, das einen Innenraum in Verlängerung des Durchgangskanals aufweist. Vorzugsweise ist die Steuermembran in dem Innenraum des Zwischengehäuses angeordnet. Auf diese Weise muss die Steuermembran nicht an dem Durchgangskanal befestigt sein und kann gemäß der Dimensionen des Zwischengehäuses beispielsweise mit vergrößertem Querschnitt vorgesehen sein.

Dabei ist es bevorzugt, wenn die Steuermembran derart an dem Zwischengehäuse befestigt ist, dass sie den Innenraum in einen zum Durchgangskanal offenen, d.h. mit dem Durchgangskanal fluidverbundenen ersten Teil und einen zum Aktor weisenden zweiten Teil abgedichtet unterteilt. Dadurch ist das Volumen der Arbeitskammer um den zu der Arbeitskammer offenen, d.h. mit der Arbeitskammer fluidverbundenen Durchgangskanal und den ersten Teil des Innenraums erweitert, so dass die Größe des ersten Teils und somit das Volumen der Arbeitskammer durch eine Wölbung der Steuermembran durch Bewegung des Steuerkolbens verändert werden kann, insbesondere gesteuert werden kann. Auf diese Weise kann das Volumen der Arbeitskammer besonders einfach und unter Verwendung weniger Bauteile gesteuert werden.

Alternativ ist es bevorzugt, wenn das Zwischengehäuse zum Aktor hin abgedichtet ist, d.h. der Innenraum auf der Seite zum Aktor hin geschlossen ist. Ferner ist es bevorzugt, wenn in dem Innenraum konzentrisch oder zumindest teilweise beabstandet vom Zwischengehäuse durch einen Spalt eine mit dem Zwischengehäuse verbundene oder an diesem abgestützte Haltestruktur zum Halten der Steuermembran senkrecht zur Lagermittelachse angeordnet ist, so dass durch den Spalt Hydraulikflüssigkeit aus der Arbeitskammer bis an die von der Tragfeder abgewandte Unterseite der Steuermembran gelangen kann und dort anliegt. Dadurch ist das Volumen der Arbeitskammer um den zu der Arbeitskammer offenen, d.h. mit der Arbeitskammer fluidverbundenen Durchgangskanal und den Innenraum erweitert, so dass die Größe des Innenraums und somit das Volumen der Arbeitskammer durch eine Wölbung der Steuermembran durch Bewegung des Steuerkolbens verändert werden kann, insbesondere gesteuert werden kann. Auf diese Weise kann das Volumen der Arbeitskammer durch ein invertiertes Steuerkolbenprinzip gesteuert werden, wobei das Volumen der Arbeitskammer durch eine Bewegung des Steuerkolbens bzw. der Steuermembran weg von der Tragfeder verkleinert wird. Ein solches invertiertes Steuerkolbenprinzip kann zum Beispiel vorteilhaft sein, um den Masseneffekt der Steuerkolbenbewegung umzukehren.

Dabei ist es besonders bevorzugt, wenn die zur Tragfeder weisende Oberseite der Steuermembran mit einer Abdeckkappe abgedeckt ist. Ferner ist es bevorzugt, wenn zwischen der Oberseite der Steuermembran und der Abdeckkappe ein vorzugsweise abgedichteter, mit einem kompressiblen Fluid, insbesondere Luft bei Umgebungsdruck, gefüllter Hohlraum vorgesehen ist. Auf diese Weise wirkt nur eine Seite der Steuermembran, nämlich die Unterseite, auf die Hydraulikflüssigkeit und die Oberseite ist durch die Abdeckkappe von der Hydraulikflüssigkeit isoliert. Durch das kompressible Fluid in dem Hohlraum wirkt bei Auslenkung der Steuermembran keine nennenswerte zusätzliche Sog- oder Druckkraft auf die Oberseite der Steuermembran.

Ein weiterer Aspekt der vorliegenden Erfindung betrifft ein Kraftfahrzeug mit einem Fahrzeugrahmen, einem Motor und einem Motorlager, das eine lagernde Verbindung zwischen dem Motor und dem Fahrzeugrahmen bildet. Erfindungsgemäß ist dabei das Motorlager als Hydrolager nach einer der zuvor erläuterten Ausführungsformen ausgebildet. Die im Zusammenhang mit dem Hydrolager beschriebenen Merkmale und Wirkungen sind analog auch auf das Kraftfahrzeug anwendbar.

In einer bevorzugten Ausführungsform ist der Motor über einen Tragarm an dem äußeren Lasteinleitungselement abgestützt. Der Tragarm ist vorzugsweise aus Kunststoff gebildet, um ein besonders geringes Gewicht und vorteilhafte Schwingungseigenschaften zu haben. Ferner ist es bevorzugt, wenn das innere Lasteinleitungselement über den Aktor, insbesondere über das Aktorgehäuse und, falls vorhanden, auch über das Zwischengehäuse an dem Fahrzeugrahmen abgestützt ist. Auf diese Weise ist eine invertierte Anordnung bzw. ein invertierter Einbau des Hydrolagers gebildet, wobei vorzugsweise die Ausgleichskammer nach oben und der Aktor nach unten gerichtet ist. Dabei kann der Aktor vorzugsweise in dem Fahrzeugrahmen versenkt, wodurch eine besonders kompakte Bauweise erzielt wird.

Bevorzugte Ausführungsformen der vorliegenden Erfindung werden im Folgenden anhand einer Zeichnung näher erläutert. Die Zeichnung zeigt in
- Fig. 1: eine Querschnittsansicht des Hydrolagers gemäß einer ersten Ausführungsform, eingebaut in einem Kraftfahrzeug zwischen Tragarm und Fahrzeugrahmen,
- Fig. 2: eine Detailansicht der Tragfeder in Zusammenwirkung mit dem Steuerkolben des Hydrolagers aus Fig. 1,
- Fig. 3: eine Detailansicht der Tragfeder in Zusammenwirkung mit dem Steuerkolben gemäß einer zweiten Ausführungsform des Hydrolagers,
- Fig. 4: eine Detailansicht der Tragfeder in Zusammenwirkung mit dem Steuerkolben gemäß einer dritten Ausführungsform des Hydrolagers,
- Fig. 5: eine Detailansicht der Tragfeder in Zusammenwirkung mit dem Steuerkolben gemäß einer vierten Ausführungsform des Hydrolagers und
- Fig. 6: eine Detailansicht der Tragfeder in Zusammenwirkung mit dem Steuerkolben gemäß einer fünften Ausführungsform des Hydrolagers.

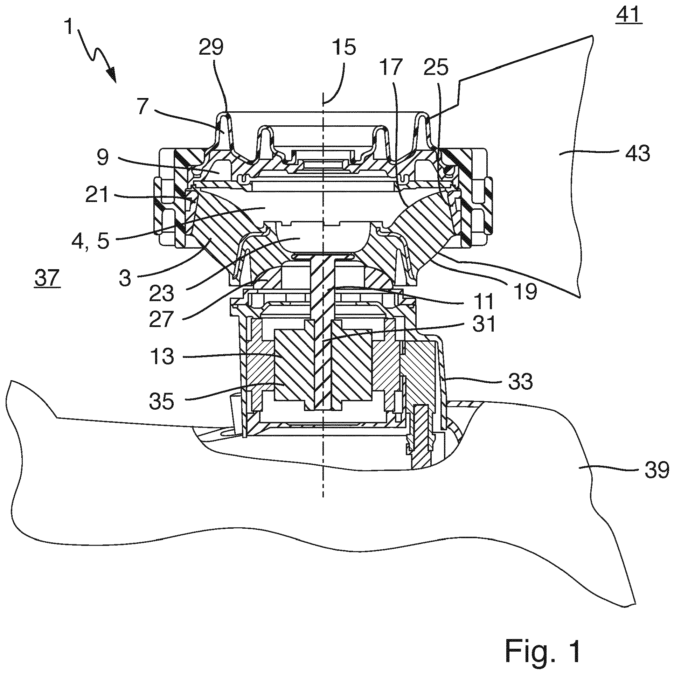

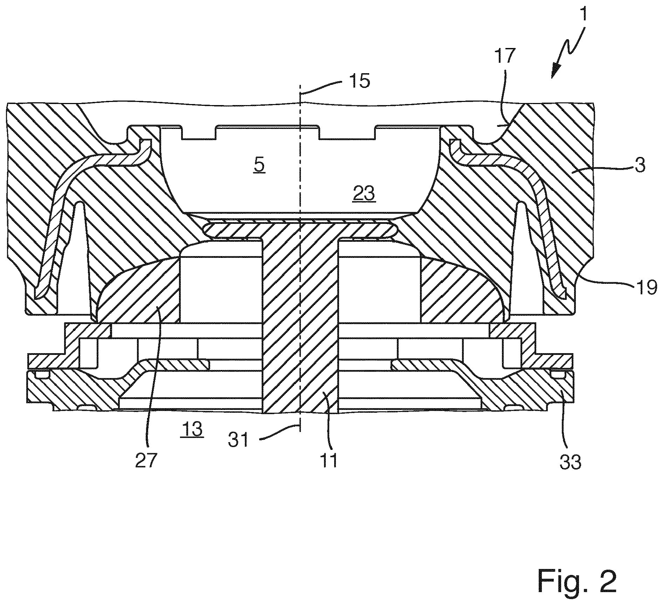

In Figuren 1 und 2 ist ein erstes Ausführungsbeispiel des erfindungsgemäßen Hydrolagers 1 dargestellt. Das Hydrolager 1 umfasst eine Tragfeder 3, eine Arbeitskammer 5, eine Ausgleichskammer 7, einen Drosselkanal 9, einen Steuerkolben 11 und einen Aktor 13.

Die Tragfeder 3 umfasst einen Innenbereich 4 teilweise, nämlich einseitig und ist aus Elastomermaterial gebildet. Sie dient zur gefederten Übertragung von Kräften in Richtung einer Lagermittelachse 15. Die Tragfeder 3 hat eine konische Form mit einer konkaven Innenseite 17, die zu dem Innenbereich 4 und der Ausgleichskammer 7 gerichtet ist, einer konvexen Außenseite 19, die von dem Innenbereich 4 und der Ausgleichskammer 7 abgewandt ist, einem umlaufenden äußeren Rand 21 und einem Zentrum 23 im Bereich des Scheitelpunkts der Tragfeder 3 im Bereich der Lagermittelachse 15. Dabei überträgt die Tragfeder 3 Lasten zwischen einem äußeren Lasteinleitungselement 25 aus Metall, das entlang des äußeren Rands 21 befestigt ist, und einem inneren Lasteinleitungselement 27 aus Metall, das im Bereich des Zentrums 23 befestigt ist und in dem ersten Ausführungsbeispiel ringförmig ausgebildet ist.

Die Arbeitskammer 5 ist in dem Innenbereich 4 vorgesehen und teilweise von der Tragfeder 3 umfasst und ist mit einer Hydraulikflüssigkeit gefüllt, so dass bei einer Lasteinleitung und der daraus resultierenden elastischen Verformung der Tragfeder 3 das Volumen der Arbeitskammer 5 verändert wird.

Die Ausgleichskammer 7 ist einseitig von einer verformbaren Haut 29 begrenzt, so dass das Volumen der Ausgleichskammer 7 ohne nennenswerte Krafteinwirkung durch Ausdehnen der Haut 29 erweitert werden kann.

Der Drosselkanal 9 ist zwischen der Arbeitskammer 5 und der Ausgleichskammer 7 als Ringkanal ausgebildet, der sich konzentrisch um die Lagermittelachse 15 erstreckt, und dient zum Austausch von Hydraulikflüssigkeit zwischen der Arbeitskammer 5 und der Ausgleichskammer 7. Dabei hat der Drosselkanal 9 einen verringerten Querschnitt im Vergleich zu der Arbeits- und Ausgleichskammer 5, 7.

Der Steuerkolben 11 ist linear beweglich entlang einer Kolbenachse 31 gelagert ist und eingerichtet ist, um durch eine Bewegung entlang einer der Kolbenachse 31 das Volumen der Arbeitskammer 5 zu steuern.

Der Aktor 13 dient zum gesteuerten Auslenken des Steuerkolbens 11 entlang der Kolbenachse 31 und ist als ein elektromagnetischer Linearmotor mit einem Aktorgehäuse 33 und in dem Aktorgehäuse 33 einem Elektromagneten 35 ausgebildet, der den Steuerkolben 11 zentral aufnimmt und durch entsprechende Schaltung entlang der Kolbenachse 31 bewegen kann. Dabei ist der Aktor 13 zentral auf der von dem Innenbereich 4 und der Ausgleichskammer 7 abgewandten Seite der Tragfeder 3 angeordnet, so dass die Kolbenachse 31 koaxial zu der Lagermittelachse 15 verläuft. Der Aktor 13 ist mit dem Aktorgehäuse 33 an dem inneren Lasteinleitungselement 27 abgestützt.

Fig. 1 zeigt auch die Anordnung des Hydrolagers 1 in einem Kraftfahrzeug 37. Das Kraftfahrzeug 37 weist einen Fahrzeugrahmen 39, einen Motor 41 und ein Motorlager in Form des erfindungsgemäßen Hydrolagers 1 auf, das eine lagernde Verbindung zwischen dem Motor 41 und dem Fahrzeugrahmen 39 bildet. Wie in Fig. 1 dargestellt, ist das Hydrolager 1 invers in dem Kraftfahrzeug 37 angeordnet. Das heißt, der Motor 41 ist über einen Tragarm 43 aus Kunststoff an dem nach oben gerichteten äußeren Lasteinleitungselement 25 abgestützt, während das innere Lasteinleitungselement 27 über den Aktor 13, konkret über das Aktorgehäuse 33, an dem Fahrzeugrahmen 39 abgestützt ist.

In dem Ausführungsbeispiel der Figuren 1 und 2 ist der Steuerkolben 11 im Zentrum 23 mit der Tragfeder 3 fest verbunden, nämlich an diese anvulkanisiert, so dass durch eine Bewegung des Steuerkolbens 11 entlang der Kolbenachse 31 die Tragfeder 3 im Bereich des Steuerkolbens 11 verformt und dadurch das Volumen der Arbeitskammer 5 gesteuert werden kann.

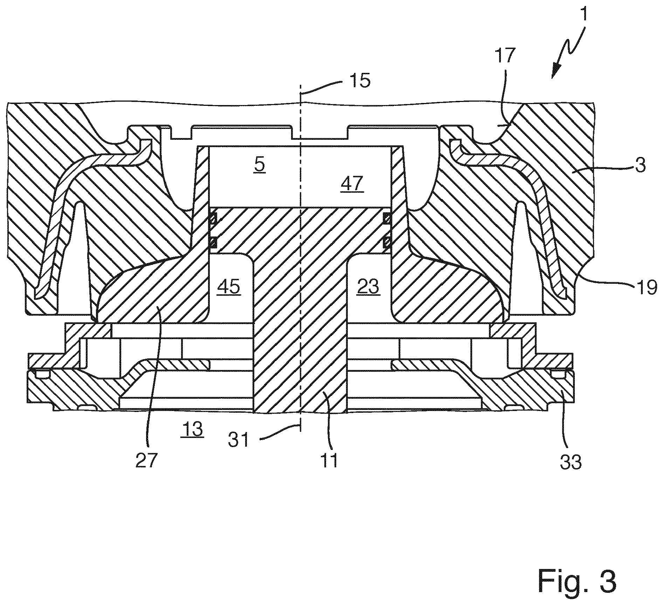

In Fig. 3 ist ein zweites Ausführungsbeispiel des erfindungsgemäßen Hydrolagers 1 dargestellt. Das zweite Ausführungsbeispiel unterscheidet sich von dem ersten Ausführungsbeispiel dadurch, dass das innere Lasteinleitungselement 27 einen Durchgangskanal 45 aufweist, der die Innenseite 17 der Tragfeder 3 mit der Außenseite 19 verbindet und ein Durchströmen von Hydraulikflüssigkeit aus der Arbeitskammer 5 zulässt. Dabei erstreckt sich der Durchgangskanal 45 entlang der Kolbenachse 31 und der Steuerkolben 11 ist gleitend verschiebbar in dem Durchgangskanal 45 gelagert und dichtet diesen ab. Dadurch ist das Volumen der Arbeitskammer 5 um den zu der Arbeitskammer 5 offenen Teil 47 des Durchgangskanals 45 erweitert, so dass die Größe dieses zur Arbeitskammer 5 offenen Teils 47 des Durchgangskanals 45 und somit das Volumen der Arbeitskammer 5 durch eine Bewegung des Steuerkolbens 11 gesteuert werden kann.

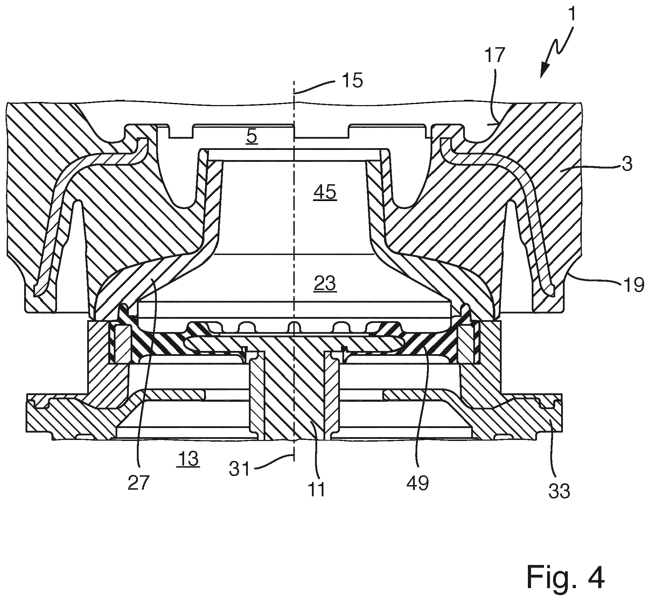

In Fig. 4 ist ein drittes Ausführungsbeispiel des erfindungsgemäßen Hydrolagers 1 dargestellt. Das dritte Ausführungsbeispiel unterscheidet sich von dem zweiten Ausführungsbeispiel dadurch, dass der Durchgangskanal 45 eine Trichterform hat, so dass der Durchmesser des Durchgangskanals 45 an der Außenseite 19 der Tragfeder 3 größer ist als der Durchmesser des Durchgangskanals 45 an der Innenseite 17 der Tragfeder 3. Ferner ist an dem Steuerkolben 11 senkrecht zur Kolbenachse 31 eine elastische Steuermembran 49 befestigt, die durch eine Bewegung des Steuerkolbens 11 entlang der Kolbenachse 31 elastisch verformt und in Schwingung versetzt werden kann. Die Steuermembran 49 ist auf der Außenseite der Tragfeder 3 an dem inneren Lasteinleitungselement 27 derart befestigt, dass die Steuermembran 49 den Durchgangskanal 45 abdichtet. Dadurch ist das Volumen der Arbeitskammer 5 um den zu der Arbeitskammer 5 offenen Durchgangskanal 45 erweitert, so dass die Größe des Durchgangskanals 45 und somit das Volumen der Arbeitskammer 5 durch eine Wölbung der Steuermembran 49 durch Bewegung des Steuerkolbens 11 gesteuert werden kann.

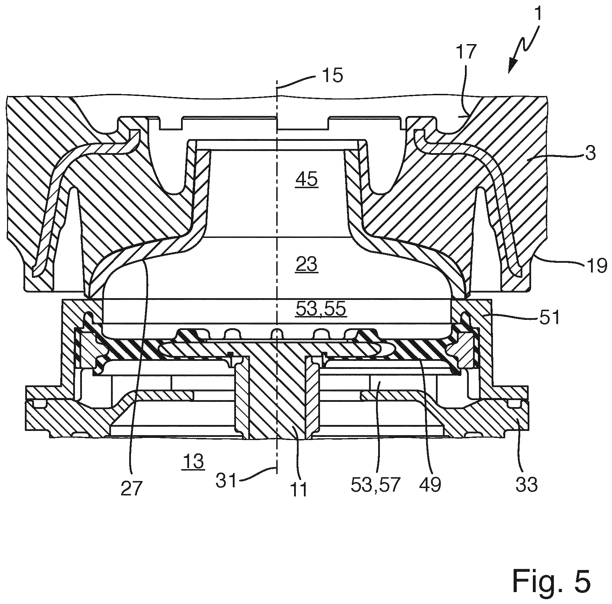

In Fig. 5 ist ein viertes Ausführungsbeispiel des erfindungsgemäßen Hydrolagers 1 dargestellt. Das vierte Ausführungsbeispiel unterscheidet sich von dem dritten Ausführungsbeispiel dadurch, dass zwischen der Außenseite 19 der Tragfeder 3 und dem Aktor 13, konkret dem Aktorgehäuse 33, ein Zwischengehäuse 51 vorgesehen ist, das einen Innenraum 53 in Verlängerung des Durchgangskanals 45 aufweist. Die Steuermembran 49 ist in dem Innenraum 53 des Zwischengehäuses 51 angeordnet und derart an dem Zwischengehäuse 51 befestigt ist, dass sie den Innenraum 53 in einen zum Durchgangskanal 45 offenen ersten Teil 55 und einen zum Aktor 13 weisenden zweiten Teil 57 abgedichtet unterteilt. Dadurch ist das Volumen der Arbeitskammer 5 um den zu der Arbeitskammer 5 offenen Durchgangskanal 45 und den ersten Teil 55 des Innenraums 53 erweitert, so dass die Größe des ersten Teils 55 und somit das Volumen der Arbeitskammer 5 durch eine Wölbung der Steuermembran 49 durch Bewegung des Steuerkolbens 11 gesteuert werden kann.

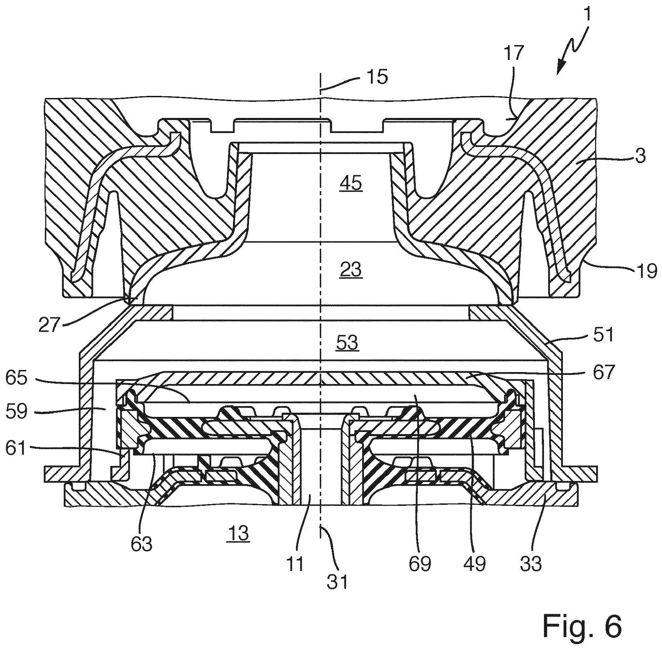

In Fig. 6 ist ein fünftes Ausführungsbeispiel des erfindungsgemäßen Hydrolagers 1 dargestellt. Das fünfte Ausführungsbeispiel unterscheidet sich von dem vierten Ausführungsbeispiel dadurch, dass das Zwischengehäuse 51 zum Aktor 13 hin abgedichtet ist und dadurch der Innenraum 53 auf der Seite zum Aktor 13 hin geschlossen ist. Ferner ist in dem Innenraum 53 konzentrisch durch einen Spalt 59 vom Zwischengehäuse 51 beabstandet eine mit dem Zwischengehäuse 51 verbundene Haltestruktur 61 zum Halten der Steuermembran 49 angeordnet, so dass durch den Spalt 59 Hydraulikflüssigkeit aus der Arbeitskammer 5 bis an die von der Tragfeder 3 abgewandte Unterseite 63 der Steuermembran 49 gelangen kann und dort anliegt, so dass ein invertiertes Steuerkolbenprinzip gebildet wird. Dadurch ist das Volumen der Arbeitskammer 5 um den zu der Arbeitskammer 5 offenen Durchgangskanal 45 und den Innenraum 53 erweitert, so dass die Größe des Innenraums 53 und somit das Volumen der Arbeitskammer 5 durch eine Wölbung der Steuermembran 49 durch Bewegung des Steuerkolbens 11 gesteuert werden kann. Die zur Tragfeder 3 weisende Oberseite 65 der Steuermembran 49 ist ferner mit einer Abdeckkappe 67 abgedeckt, wobei zwischen der Oberseite 65 der Steuermembran 49 und der Abdeckkappe 67 ein abgedichteter, mit einem kompressiblen Fluid, wie Luft bei Umgebungsdruck, gefüllter Hohlraum 69 vorgesehen ist.

Ein Hydrolager 1 gemäß den zuvor beschriebenen Ausführungsformen weist eine besonders kompakte Bauweise und einen Aktor 13 mit langer Lebensdauer auf.

## Patentansprüche

1. Hydrolager (1) mit
einer Tragfeder (3), die einen Innenbereich (4) zumindest teilweise umfasst,
einer zumindest teilweise in dem Innenbereich (4) angeordneten Arbeitskammer (5), die mit einer Hydraulikflüssigkeit gefüllt ist,
einer Ausgleichskammer (7),
einem zwischen der Arbeitskammer (5) und der Ausgleichskammer (7) ausgebildeten Drosselkanal (9) zum Austausch von Hydraulikflüssigkeit,
einem Steuerkolben (11), der eingerichtet ist, um durch eine Bewegung entlang einer Kolbenachse (31) das Volumen der Arbeitskammer (5) zu steuern, und
einem Aktor (13) zum gesteuerten Auslenken des Steuerkolbens (11) entlang der Kolbenachse (31),
**dadurch gekennzeichnet, dass**
der Aktor (13) zumindest teilweise auf der von dem Innenbereich (4) abgewandten Seite der Tragfeder (3) angeordnet ist.

2. Hydrolager nach Anspruch 1, wobei die Tragfeder (3) eine konische Form hat mit einer konkaven Innenseite (17), die zu der Ausgleichskammer (7) gerichtet ist, einer konvexen Außenseite (19), die von der Ausgleichskammer (7) abgewandt ist, einem umlaufenden äußeren Rand (21) und einem Zentrum (23).

3. Hydrolager nach Anspruch 2, wobei die Tragfeder (3) Lasten überträgt zwischen einem äußeren Lasteinleitungselement (25), das entlang des äußeren Rands (21) befestigt ist, und einem inneren Lasteinleitungselement (27), das im Zentrum (23) befestigt ist, und
wobei der Aktor (13) an dem inneren Lasteinleitungselement (27) abgestützt ist.

4. Hydrolager nach Anspruch 2 oder 3, wobei der Steuerkolben (11) im Zentrum (23) mit der Tragfeder (3) fest verbunden ist, so dass durch eine Bewegung des Steuerkolbens (11) entlang der Kolbenachse (31) die Tragfeder (3) verformt und dadurch das Volumen der Arbeitskammer (5) verändert werden kann.

5. Hydrolager nach Anspruch 3, wobei das innere Lasteinleitungselement (27) einen Durchgangskanal (45) aufweist, der ein Durchströmen von Hydraulikflüssigkeit aus der Arbeitskammer (5) zulässt.

6. Hydrolager nach Anspruch 5, wobei der Durchgangskanal (45) sich entlang der Kolbenachse (31) erstreckt und der Steuerkolben (11) verschiebbar in dem Durchgangskanal (45) gelagert ist und diesen abdichtet.

7. Hydrolager nach Anspruch 5, wobei der Durchgangskanal (45) eine Trichterform hat, so dass der Durchmesser des Durchgangskanals (45) an der Außenseite (19) der Tragfeder (3) größer ist als der Durchmesser des Durchgangskanals (45) an der Innenseite (17) der Tragfeder (3), vorzugsweise zwischen 1% und 1000% größer, weiter bevorzugt zwischen 50% und 150% größer, meist bevorzugt 100% größer.

8. Hydrolager nach Anspruch 7, wobei an dem Steuerkolben (11) senkrecht zur Kolbenachse (31) eine Steuermembran (49) befestigt ist, die durch eine Bewegung des Steuerkolbens (11) entlang der Kolbenachse (31) gewölbt werden kann.

9. Hydrolager nach Anspruch 8, wobei die Steuermembran (49) auf der Außenseite (19) der Tragfeder (3) an dem inneren Lasteinleitungselement (27) derart befestigt ist, dass die Steuermembran (49) den Durchgangskanal (45) abdichtet.

10. Hydrolager nach Anspruch 8, wobei zwischen der Außenseite (19) der Tragfeder (3) und dem Aktor (13) ein Zwischengehäuse (51) vorgesehen ist, das einen Innenraum (53) in Verlängerung des Durchgangskanals (45) aufweist, und
wobei die Steuermembran (49) in dem Innenraum (53) des Zwischengehäuses (51) angeordnet ist.

11. Hydrolager nach Anspruch 10, wobei die Steuermembran (49) derart an dem Zwischengehäuse (51) befestigt ist, dass sie den Innenraum (53) in einen zum Durchgangskanal (45) offenen ersten Teil (55) und einen zum Aktor (13) weisenden zweiten Teil (57) abgedichtet unterteilt.

12. Hydrolager nach Anspruch 10, wobei das Zwischengehäuse (51) zum Aktor (13) hin abgedichtet ist und
wobei in dem Innenraum (53) beabstandet vom Zwischengehäuse (51) durch einen Spalt (59) eine Haltestruktur (61) zum Halten der Steuermembran (49) angeordnet ist, so dass durch den Spalt (59) Hydraulikflüssigkeit aus der Arbeitskammer (5) bis an die von der Tragfeder (3) abgewandte Unterseite (63) der Steuermembran (49) gelangen kann und dort anliegt.

13. Hydrolager nach Anspruch 12, wobei die zur Tragfeder (3) weisende Oberseite (65) der Steuermembran (49) mit einer Abdeckkappe (67) abgedeckt ist, wobei zwischen der Oberseite (65) der Steuermembran (49) und der Abdeckkappe (67) ein mit einem kompressiblen Fluid gefüllter Hohlraum (69) vorgesehen ist.

14. Kraftfahrzeug (37) mit
einem Fahrzeugrahmen (39),
einem Motor (41) und
einem Motorlager, das eine lagernde Verbindung zwischen dem Motor (41) und dem Fahrzeugrahmen (39) bildet,
**dadurch gekennzeichnet, dass**
das Motorlager als Hydrolager (1) nach einem der Ansprüche 1 bis 13 ausgebildet ist.

15. Kraftfahrzeug gemäß Anspruch 14, wobei der Motor (41) über einen Tragarm (43) an dem äußeren Lasteinleitungselement (25) abgestützt ist und
wobei das innere Lasteinleitungselement (27) über den Aktor (13) an dem Fahrzeugrahmen (39) abgestützt ist.
